# EUROPÄISCHE PATENTSCHRIFT

(11) **EP 3 482 918 B1**
(45) Veröffentlichungstag und Bekanntmachung des Hinweises auf die Patenterteilung: **28.12.2022**
(21) Anmeldenummer: 17200877.3
(22) Anmeldetag: 09.11.2017
(51) Int. Cl.: B29C 70/34, B29D 99/00, B29L 31/08

(54) **VERFAHREN ZUR HERSTELLUNG EINES STEGS FÜR EIN WINDENERGIEANLAGENROTORBLATT**
METHOD FOR PRODUCING A WEB FOR A WIND TURBINE ROTOR BLADE
PROCÉDÉ DE FABRICATION D'UNE ENTRETOISE D'UNE PALE DE ROTOR D'UNE ÉOLIENNE

(43) Veröffentlichungstag der Anmeldung: 15.05.2019
(73) Patentinhaber: Nordex Energy SE & Co. KG, 22419 Hamburg (DE)
(72) Erfinder: FRANKOWSKI, Marco, 18347 Ostseebad Wustrow (DE)
(74) Vertreter: Hauck Patentanwaltspartnerschaft mbB

(56) Entgegenhaltungen:
- WO-A1-2011/113812
- WO-A1-2015/082404
- WO-A1-2016/177375
- DE-A1-102014 018 022

## Beschreibung

Die Erfindung betrifft ein Verfahren zur Herstellung eines Stegs für ein Windenergieanlagenrotorblatt, wobei der Steg einen Stegabschnitt und einen Flanschabschnitt zur Verbindung des Stegs mit einem Gurt des Windenergieanlagenrotorblatts aufweist.

In vielen bekannten Rotorblattkonstruktionen bilden derartige Stege ein wichtiges Element der Tragstruktur. Die Tragstruktur des Rotorblatts erstreckt sich dabei in Längsrichtung des Rotorblatts von der Blattwurzel bis nahe an die Blattspitze heran. Die Tragstrukturen umfassen in der Regel paarweise einander gegenüberliegend angeordnete Gurte, die entlang der Druckseite und entlang der Saugseite des Rotorblatts verlaufen. Die Gurte weisen eine hohe Zugfestigkeit auf, um die unter aerodynamischer Belastung auftretenden Kräfte aufzunehmen. Die Verbindung zwischen zwei paarweise angeordneten Gurten wird über einen oder mehrere Stege hergestellt.

DE 102014018022 A1 offenbart ein Verfahren zur Herstellung eines Stegs für ein Windenergieanlagenrotorblatt.

Bei Verwendung nur eines Stegs bilden die beiden Gurte und der Steg im Querschnitt einen Doppel-T-Träger. Bei Verwendung von zwei parallel und in einem Abstand voneinander angeordneten Stegen entsteht ein Holmkasten. Häufig werden die Stege in Sandwichbauweise erstellt, d.h. aus einem leichten Kernmaterial, beispielsweise Balsaholz oder ein geschäumtes Kunststoffmaterial, das auf beiden Seiten mit je einer Deckschicht aus einem Faserverbundmaterial versehen ist. Die plattenförmigen, vorgefertigten Stege werden dann bei der Montage des Rotorblatts mit den beiden Gurten verklebt.

Häufig sind die Gurte in zwei Rotorblatthalbschalen integriert, die entlang einer Profilnasenkante und einer Profilendkante miteinander verbunden werden. Das Einkleben der Stege findet bei einer solchen Konstruktion zumindest teilweise innerhalb einer geschlossenen Struktur statt, so dass es allenfalls stark eingeschränkten Zugang zu den Klebestellen gibt. In Anbetracht der sehr großen Abmessungen der zu verklebenden Bauteile und der unvermeidlichen Fertigungstoleranzen ist es schwierig, eine optimale Verklebung der Stege mit den Gurten zu erzielen.

Aus der Druckschrift WO 94/01271 A1 ist ein Flügelholm mit zwei pultrudierten Gurten bekannt geworden. Die pultrudierten Gurte weisen jeweils zwei Verklebeflansche auf, zwischen denen Öffnung ausgebildet ist, in die ein vorgefertigter Steg eingesetzt wird.

Aus der Druckschrift WO 2011/113812 A1 ist ein Kastenholm für ein Windenergieanlagenrotorblatt bekannt geworden. Die Gurte des Kastenholms werden in einer separaten Herstellungsform vorgefertigt. Hierzu werden in einen mittleren Abschnitt der Herstellungsform Verstärkungsfasern und an den seitlichen Rändern zwei pultrudierte Eckprofile eingelegt. Die Eckprofile weisen Verklebeflansche auf, mit denen später die beiden Stege des Kastenholms verklebt werden.

Aus der Druckschrift WO 2016/066207 A1 ist eine Herstellungsform für Stege eines Windenergieanlagenrotorblatts bekannt geworden. Die Stege werden in Sandwichbauweise aus einem Kern und mehreren Lagen von Verstärkungsfasern hergestellt. Befestigungsflansche des Stegs werden an seitlichen Formplatten hergestellt, deren Winkel und Position relativ zu einem mittleren Teil der Form verstellbar ist.

Aus der Druckschrift WO 2015/082404 A1 ist ein Verfahren zur Herstellung eines Stegs für ein Windenergieanlagenrotorblatt bekannt geworden. Der Steg wird aus einem in Sandwichbauweise gefertigten Stegabschnitt und einem vorgefertigten Flanschabschnitt durch Aufbringen von Laminatlagen zusammengefügt.

Aus der Druckschrift WO 2016/177375 A1 ist ein Verfahren zur Herstellung von Stegen für Windenergieanlagenrotorblätter bekannt geworden. An den beiden Längskanten eines in Sandwichbauweise aufgebauten Stegabschnitts werden pultrudierte T-Profile angeordnet, die einen Flansch zur Verklebung mit Gurten des Windenergieanlagenrotorblatts sowie einen senkrecht davon vorstehenden Befestigungsabschnitt, der zwischen Verstärkungsfaserlagen des Stegabschnitts eingebettet wird, aufweisen.

Aus der Druckschrift DE 10 2011 082 664 A1 sind ein Verfahren und eine Herstellungsform für einen Steg eines Windenergieanlagenrotorblatts bekannt geworden. Der Steg wird in Sandwichbauweise aus einem Kern und mehreren Lagen von Verstärkungsfasern aufgebaut. Befestigungsflansche des Stegs, die zur Verklebung mit Gurten des Windenergieanlagenrotorblatts dienen, werden in der Herstellungsform aufrecht stehend zwischen einem in der Herstellungsform angeordneten Einleger und einem an der Herstellungsform befestigten Winkelprofil, das eine Seitenwand der Herstellungsform bildet, gehalten. Aus der Druckschrift DE 10 2014 018 022 A1 ist eine Weiterentwicklung dieser Lösung bekannt geworden, bei der die Seitenwand von einer Druckplatte gebildet ist, die über einen Keil an einem Winkel der Herstellungsform abgestützt wird, so dass sie an den Befestigungsflansch herangepresst wird.

Davon ausgehend ist es die Aufgabe der Erfindung, ein Verfahren zur Herstellung eines Stegs für ein Windenergieanlagenrotorblatt zur Verfügung zu stellen, das besonders einfach und zuverlässig ausführbar ist und zu einem Steg mit optimalen Voraussetzungen für die Montage in das Rotorblatt führt.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Herstellung eines Stegs für ein Windenergieanlagenrotorblatt, wobei der Steg einen Stegabschnitt und einen Flanschabschnitt zur Verbindung des Stegs mit einem Gurt des Windenergieanlagenrotorblatts aufweist und das Verfahren die folgenden Schritte umfasst:
- Bereitstellen einer Herstellungsform, die eine erste Formfläche für den Stegabschnitt, eine zweite Formfläche für den Flanschabschnitt und ein Widerlager aufweist, wobei die zweite Formfläche in einem Winkel zu der ersten Formfläche angeordnet ist und das Widerlager der zweiten Formfläche gegenüberliegt,
- Anordnen einer ersten Lage von Verstärkungsfasern in der Herstellungsform, sodass eine erste Teilfläche der ersten Lage an der ersten Formfläche und eine zweite Teilfläche der ersten Lage an der zweiten Formfläche angeordnet ist,
- Anordnen eines pultrudierten Profils in der Herstellungsform, so dass eine Oberseite des pultrudierten Profils der zweiten Formfläche zugewandt ist und die zweite Teilfläche der ersten Lage zwischen der Oberseite und der zweiten Formfläche angeordnet ist,
- Abstützen des pultrudierten Profils an dem Widerlager,
- Einbetten des pultrudierten Profils und der Verstärkungsfasern in ein Kunststoffmaterial,
- Entnehmen des fertigen Stegs aus der Herstellungsform, wobei der Stegabschnitt die erste Teilfläche der ersten Lage und der Flanschabschnitt das pultrudierte Profil aufweist.

Der mit dem Verfahren hergestellte Steg weist einen Stegabschnitt und einen Flanschabschnitt auf. Nach dem Einbau des Stegs in ein Rotorblatt ist der Stegabschnitt in der Regel zwischen einem druckseitigen und einem saugseitigen Gurt des Windenergieanlagenrotorblatts angeordnet. Der Stegabschnitt ist im Wesentlichen plattenförmig und kann sich über einen Großteil der Gesamtlänge des Windenergieanlagenrotorblatts erstrecken. Die Höhe des Stegabschnitts kann über die Länge des Windenergieanlagenrotorblatts variieren, entsprechend der von der Blattwurzel zu Blattspitze hin abnehmenden Profildicke des Rotorblatts. Als Flanschabschnitt wird derjenige Teil des Stegs bezeichnet, der mit einem Gurt verbunden wird. In einem Querschnitt durch den Steg, der im eingebauten Zustand des Stegs in einer Profilebene des Rotorblatts liegt, kann der Flanschabschnitt in einem Winkel von etwa 90° zu dem Stegabschnitt angeordnet sein. Je nach Einbaulage des Stegs und Verlauf des aerodynamischen Profils bzw. Anordnung der Gurte in dem Rotorblatt kann der Winkel jedoch auch von 90° abweichen und beispielsweise in einem Bereich von 70° bis 110° liegen. Der Flanschabschnitt kann sich ausgehend von dem Stegabschnitt in nur eine Richtung erstrecken. Alternativ kann sich der Flanschabschnitt ausgehend von dem Stegabschnitt in zwei entgegengesetzte Richtungen erstrecken. Weiterhin versteht sich, dass der Steg zwei derartige Flanschabschnitte an sich gegenüberliegenden Kanten aufweisen kann. Erstrecken sich beide Flanschabschnitte nur in eine Richtung von dem Stegabschnitt aus, handelt es sich insbesondere um einen C-Steg. Erstrecken sich beide Flanschabschnitte von dem Stegabschnitt aus in entgegengesetzte Richtungen, handelt es sich um einen T-Steg. Jeder Flanschabschnitt weist an seiner äußeren Seite eine Klebefläche auf, über die die Verbindung zu einem Gurt hergestellt wird.

Zur Herstellung eines Stegs wird eine Herstellungsform verwendet, die eine erste Formfläche und eine zweite Formfläche aufweist. An der ersten Formfläche entsteht bei dem Verfahren der Stegabschnitt, an der zweiten Formfläche der Flanschabschnitt. Entsprechend dem gewünschten Winkel zwischen dem Flanschabschnitt und dem Stegabschnitt sind die beiden Formflächen in einem Winkel zueinander angeordnet.

Die Herstellungsform weist außerdem ein Widerlager auf, das der zweiten Formfläche gegenüberliegt. Erste Formfläche, zweite Formfläche und Widerlager können einteilig ausgebildet sein. Alternativ kann das Widerlager an einem separaten Teil der Herstellungsform angeordnet und mit weiteren Teilen, die die erste und/oder die zweite Formfläche aufweisen, verbunden sein. In jedem Fall befindet sich das Widerlager relativ zu der zweiten Formfläche während der Ausführung des Verfahrens in einer festen Position, so dass das pultrudierte Profil an dem Widerlager abgestützt und in Richtung zu der zweiten Formfläche hin gepresst werden kann.

Bei dem Verfahren wird eine erste Lage von Verstärkungsfasern in der Herstellungsform angeordnet. Eine erste Teilfläche dieser ersten Lage ist dann an der ersten Formfläche angeordnet. Sie bildet später den Stegabschnitt oder einen Teil davon. Eine zweite Teilfläche der ersten Lage ist an der zweiten Formfläche angeordnet. Diese Teilfläche bildet später den Flanschabschnitt oder ein Teil davon.

Nach dem Anordnen der ersten Lage von Verstärkungsfasern in der Herstellungsform wird in der Herstellungsform ein pultrudiertes Profil angeordnet. Das pultrudierte Profil wurde in einem Pultrusionsverfahren hergestellt und kann beispielsweise aus in ein Matrixmaterial eingebetteten Glas- oder Kohlenstofffasern bestehen. Soweit das pultrudierte Profil nach der Pultrusion nicht nachbearbeitet wurde, weist es über seine gesamte Länge einen gleichmäßigen Querschnitt auf. Das pultrudierte Profil weist eine große Länge auf und kann sich insbesondere über die gesamte Länge des Stegs erstrecken. Der Querschnitt des pultrudierten Profils kann den jeweiligen Anforderungen entsprechend gewählt werden. Eine Dicke des pultrudierten Profils kann beispielsweise im Bereich von 1 mm bis 10 mm liegen, wodurch alle Festigkeitsanforderungen an den das pultrudierte Profil aufweisenden Flanschabschnitt erfüllt werden können. Eine Breite des pultrudierten Profils kann beispielsweise im Bereich von 3 cm bis 30 cm liegen. Diese Breite kann insbesondere der Breite des Flanschabschnitts entsprechen. Eine Breite in dem genannten Bereich ist für das Herstellen einer zuverlässigen Klebeverbindung zu einem Gurt in der Regel ausreichend.

Das pultrudierte Profil wird in der Herstellungsform so angeordnet, dass eine Oberseite des pultrudierten Profils der zweiten Formfläche zugewandt ist und die zweite Teilfläche der ersten Lage zwischen der Oberseite und der zweiten Formfläche angeordnet ist. Beim nachfolgenden Abstützen des pultrudierten Profils an dem Widerlager kann dadurch die Anordnung der Verstärkungsfasern der zweiten Teilfläche der ersten Lage fixiert werden.

Nach dem Einbetten des pultrudierten Profils und der Verstärkungsfasern in ein Kunststoffmaterial kann der (gegebenenfalls bis auf Nachbearbeitungsschritte) fertige Steg aus der Herstellungsform entnommen werden. Mit dem Einbetten der Verstärkungsfasern und des pultrudierten Profils in das Kunststoffmaterial ist gemeint, dass aus den Verstärkungsfasern, dem pultrudierten Profil und dem Kunststoffmaterial ein Faserverbundmaterial entsteht, also eine dauerhaft fest verbundene Einheit. Nicht erforderlich ist, dass alle Verstärkungsfasern und insbesondere das pultrudierte Profil von allen Seiten vollständig von dem Kunststoffmaterial umgeben sind. Mindestens eine Seite des pultrudierten Profils gelangt jedoch in innigen Kontakt mit dem Kunststoffmaterial und geht eine dauerhafte Verbindung damit ein.

Ein Vorteil des Verfahrens gegenüber dem aus der Druckschrift DE 10 2014 018 022 A1 bekannten Ansatz besteht darin, dass eine einfachere Herstellungsform mit einer geringeren Anzahl beweglicher Teile verwendet werden kann. Insbesondere ist zur Ausbildung des Flanschabschnitts keine Druckplatte erforderlich.

In einer Ausgestaltung werden mehrere der ersten Lagen in der Herstellungsform angeordnet, wobei die zweiten Teilflächen unterschiedliche Größen aufweisen, so dass die Dicke eines von den ersten Lagen gebildeten Laminats des Flanschabschnitts mit zunehmendem Abstand von dem Stegabschnitt abnimmt. Jede der mehreren ersten Lagen kann im Übrigen so angeordnet werden, wie vorstehend zum Anordnen der ersten Lage in der Herstellungsform erläutert. Insbesondere kann jede der ersten Lagen eine erste Teilfläche aufweisen, die an der ersten Formfläche angeordnet wird. Durch die Verwendung mehrerer erster, "maßgeschneiderter" Lagen kann ein hinreichend stabiler und dennoch sehr leichter Steg ausgebildet werden.

In einer Ausgestaltung wird vor dem Einbetten in das Kunststoffmaterial eine zweite Lage von Verstärkungsfasern in die Herstellungsform eingelegt, die eine erste Teilfläche aufweist, die oberhalb der ersten Teilfläche der ersten Lage angeordnet wird, und eine zweite Teilfläche, die an einem von der zweiten Teilfläche der ersten Lage nicht bedeckten Abschnitt der Oberseite des pultrudierten Profils angeordnet wird. Wie erwähnt bilden die ersten Teilflächen der ersten und zweiten Lage den Stegabschnitt. Die zweiten Teilflächen der ersten und zweiten Lage bilden gemeinsam mit dem pultrudierten Profil den Flanschabschnitt, wobei sich die beiden zweiten Teilflächen von dem Stegabschnitt aus in entgegengesetzte Richtungen entlang der Oberseite des pultrudierten Profils erstrecken. In dieser Ausgestaltung wird also ein zu beiden Seiten erstreckter Flanschabschnitt hergestellt, wie bei einem I-Steg. Ein besonderer Vorteil der beschriebenen Verfahrensführung ist, dass für die Ausbildung des in die der zweiten Teilfläche der ersten Lage entgegengesetzte Richtung weisenden Teils des Flanschabschnitts keinerlei zusätzliche Formteile benötigt werden. Stattdessen gibt das an der Herstellungsform fixierte pultrudierte Profil die Anordnung der diesen Flanschabschnitt mit ausbildenden Verstärkungsfasern vor. Es versteht sich, dass mehrere zweite Lagen von Verstärkungsfasern in der genannten Weise in die Herstellungsform eingelegt werden können, die wie zu den ersten Lagen erläutert zweite Teilflächen unterschiedlicher Größen aufweisen können, so dass die Dicke eines von den zweiten Lagen gebildeten Laminats des Flanschabschnitts mit zunehmendem Abschnitt von dem Stegabschnitt abnimmt.

In einer Ausgestaltung wird vor dem Einbetten in das Kunststoffmaterial eine dritte Lage von Verstärkungsfasern in der Herstellungsform an der ersten Formfläche angeordnet, wobei sich die dritte Lage nicht über die zweite Formfläche erstreckt, sondern an dem pultrudierten Profil endet. Somit wird die dritte Lage insgesamt im Wesentlichen in einer Ebene angeordnet. Sie dient als Verstärkung des Stegabschnitts.

In einer Ausgestaltung wird zwischen der ersten Teilfläche der ersten Lage und der ersten Teilfläche der zweiten Lage ein Kernmaterial in die Herstellungsform eingelegt. Das Kernmaterial kann beispielsweise Balsaholz oder ein geschäumtes Kunststoffmaterial sein. Durch die Anordnung des Kernmaterials zwischen erster und zweiter Lage entsteht ein Stegabschnitt in Sandwichbauweise.

In einer Ausgestaltung verjüngt sich das Kernmaterial in Richtung zu dem pultrudierten Profil hin. Dementsprechend verringert sich die Dicke des Stegabschnitts zum Flanschabschnitt hin, was für eine gleichmäßige Krafteinleitung vorteilhaft sein kann.

In einer Ausgestaltung wird das Kernmaterial in einem Mittelteil des Stegabschnitts angeordnet, so dass es in einem Abstand von dem pultrudierten Profil endet. Diese Ausgestaltung sowie die zuvor erläuterte mit dem sich verjüngenden Kernmaterial kann gegebenenfalls an beiden Seiten des Stegabschnitts vorgesehen werden, sofern der Steg an beiden Seiten Flanschabschnitte aufweist. Endet das Kernmaterial in einem Abstand von dem pultrudierten Profil, weist der Stegabschnitt in einem unmittelbar an den Flanschabschnitt angrenzenden Bereich eine geringe Dicke auf, was ebenfalls für eine gleichmäßige Krafteinleitung von Vorteil sein kann.

In einer Ausgestaltung ist mindestens ein Teil der Verstärkungsfasern mit einem flüssigen Kunststoffmaterial, das beim Einbetten des pultrudierten Profils und der Verstärkungsfasern in das Kunststoffmaterial aushärtet, vorimprägniert. Derartige vorimprägnierte Halbzeuge werden auch als Prepregs bezeichnet. Sie vereinfachen eine gleichmäßige Verteilung des Kunststoffmaterials und können die Ausführung des Verfahrens erleichtern. Insbesondere kann lediglich ein Teil der bei dem Verfahren verwendeten Lagen von Verstärkungsfasern in der genannten Weise vorimprägniert sein, gegebenenfalls mit einem Kunststoffmaterialüberschuss. In diesem Fall können die vorimprägnierten Halbzeuge mit trockenen Lagen von Verstärkungsfasern kombiniert werden, die dann ebenfalls in das in den vorimprägnierten Halbzeugen enthaltene Kunststoffmaterial eingebettet werden.

In einer Ausgestaltung erfolgt das Einbetten in das Kunststoffmaterial durch Einbringen eines flüssigen Kunststoffmaterials in die Herstellungsform in einem Vakuuminfusionsverfahren und anschließendes Aushärten des flüssigen Kunststoffmaterials. In diesem Fall können alle Verstärkungsfasern trocken in die Herstellungsform eingelegt werden. Auch eine Kombination mit vorimprägnierten Halbzeugen ist möglich.

In einer Ausgestaltung wird die Herstellungsform für das Vakuuminfusionsverfahren mit einer Vakuumfolie derart geschlossen, dass eine der Oberseite gegenüberliegende Unterseite des pultrudierten Profils außerhalb des eingeschlossenen Bereichs verbleibt. Dies kann insbesondere dadurch geschehen, dass ein Rand der Vakuumfolie luftdicht an die Oberseite des pultrudierten Profils oder an eine seitliche Stirnfläche des pultrudierten Profils angeschlossen wird. Auf diese Weise bleibt die Unterseite des pultrudierten Profils von dem Vakuuminfusionsverfahren unberührt. Die für eine Verbindung mit einem Gurt gegebenen Eigenschaften der Unterseite bleiben daher erhalten.

In einer Ausgestaltung ist an einer der Oberseite gegenüberliegende Unterseite des pultrudierten Profils ein Abreißgewebe angeordnet, dass vor dem Entnehmen des fertigen Stegs aus der Herstellungsform nicht entfernt wird. Die Anordnung von Abreißgeweben ist von pultrudierten Profilen bekannt. Das Abreißgewebe kann schon bei der Pultrusion der pultrudierten Profile an einer Oberfläche des Profils angeordnet werden. Beim Abreißen des Abreißgewebes entsteht eine sogenannte aktivierte Oberfläche, die frei von Verschmutzungen ist und für eine Verklebung besonders vorteilhafte Eigenschaften aufweist. Bei dem Verfahren kann das Abreißgewebe von der Unterseite des pultrudierten Profils nach der Fertigstellung des Stegs entfernt werden, so dass die vorteilhaften Oberflächeneigenschaften für die Verbindung mit dem Gurt zur Verfügung stehen.

In einer Ausgestaltung weist die Herstellungsform einen Einleger auf, an dem die zweite Formfläche ausgebildet ist. Gegebenenfalls kann auch ein Teil der ersten Formfläche an dem Einleger ausgebildet sein. Die Verwendung eines solchen Einlegers ist insbesondere dann sinnvoll, wenn der von erster und zweiter Formfläche eingeschlossene Winkel kleiner ist als 90°. In diesem Fall kann die Verwendung eines Einlegers das Entformen des fertigen Stegs vereinfachen oder überhaupt erst ermöglichen.

In einer Ausgestaltung wird beim Abstützen des pultrudierten Profils an dem Widerlager eine Kraft auf das pultrudierte Profil ausgeübt, die die Verstärkungsfasern zwischen der Oberseite des pultrudierten Profils und der zweiten Formfläche kompaktiert . Auf diese Weise kann dazu beigetragen werden, dass der fertige Steg exakt die vorgesehenen Abmessungen erhält. Außerdem kann ein Faservolumengehalt im Bereich des Flanschabschnitts in gewünschter Weise beeinflusst werden.

In einer Ausgestaltung werden zum Abstützen des pultrudierten Profils an dem Widerlager Stützmittel verwendet, die zwischen dem pultrudierten Profil und dem Widerlager eingesetzt werden. Bei den Stützmitteln kann es sich beispielsweise um Klötze, Keile, Federn oder sonstige elastische Elemente handeln. Durch die Verwendung derartiger Stützmittel gelingt eine angemessene Fixierung des pultrudierten Profils besonders einfach. Zudem können die Stützmittel beim Entnehmen des fertigen Stegs aus der Herstellungsform einfach entfernt werden.

Als Widerlager an der Herstellungsform kann grundsätzlich jedes Element dienen, an dem eine Abstützung des pultrudierten Profils erfolgen kann. Insbesondere kann eine Nut, eine Bohrung oder eine Rippe als Widerlager dienen und mit geeigneten Stützmitteln zusammenwirken. In einer Ausgestaltung weist das Widerlager einen Zapfen auf. Der Zapfen kann insbesondere in einem Winkel von etwa 90° zur ersten Formfläche angeordnet sein und/oder sich annähernd parallel zur zweiten Formfläche erstrecken. Ein besonderer Vorteil der Verwendung eines solchen Zapfens ist, dass eine Abstützung des pultrudierten Profils auf unterschiedlichen Höhen möglich ist.

In einer Ausgestaltung verjüngt sich ein Querschnitt des pultrudierten Profils zu den Enden des Querschnitts hin. Insbesondere kann das pultrudierte Profil im Querschnitt etwa trapezförmig ausgebildet sein. Dadurch kann ein hinreichend fester Flanschabschnitt mit relativ geringem Gewicht hergestellt werden.

Nachfolgend wird die Erfindung anhand von Figuren näher erläutert. Es zeigen:
- Figur 1: einen mit dem Verfahren hergestellten Steg in einer vereinfachten, perspektivischen Ansicht,
- Figur 2: den Steg aus Figur 1 nach der vorgesehenen Montage in ein Windenergieanlagenrotorblatt in einer schematischen, vereinfachten Querschnittsdarstellung,
- Figur 3: einen Teil eines Stegs in einer Herstellungsform beim Anordnen eines Stützmittels,
- Figur 4: die Anordnung aus Figur 3 mit eingesetzten Stützmitteln und nach dem Schließen der Herstellungsform mit einer Vakuumfolie,
- Figur 5: ein pultrudierten Profil in einer Querschnittsdarstellung,
- Figuren 6a bis 6b: Teile unterschiedlicher Stege in einer Herstellungsform, die sich im vorgesehenen Winkel zwischen Flanschabschnitt und Stegabschnitt unterscheiden.

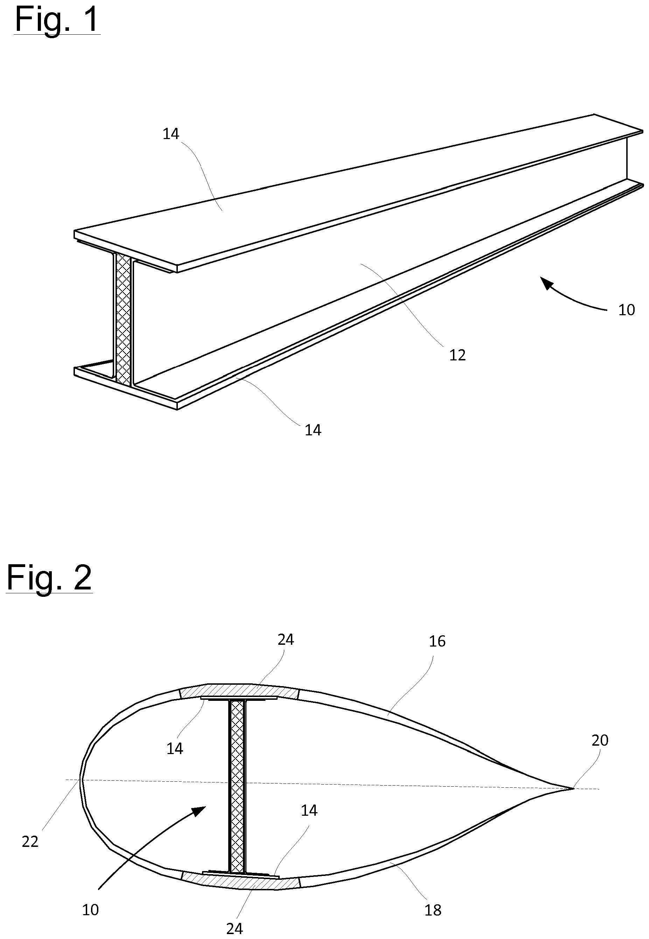

Der in Figur 1 dargestellte Steg 10 weist einen Stegabschnitt 12 und zwei an gegenüberliegenden Enden des Stegabschnitts 12 angeordnete Flanschabschnitte 14 auf. Der Steg 10 erstreckt sich über einen Großteil der Gesamtlänge des Windenergieanlagenrotorblatts, in das er eingebaut werden soll. Näher am Betrachter befindet sich das der Blattwurzel zugewandte Ende des Stegs 10, an dem der Steg 10 eine größere Höhe aufweist. Weiter vom Betrachter entfernt ist das der Blattspitze zugewandte Ende des Stegs 10 zu erkennen. Dort weist der Steg 10 eine deutlich geringere Höhe auf. Die beiden Flanschabschnitte 14 erstrecken sich jeweils ausgehend von dem Stegabschnitt 12 in zwei entgegengesetzte Richtungen. Der Stegabschnitt 12 ist im Querschnitt I-förmig. Der Steg 10 wird daher als I-Steg oder unter Einbeziehung der beiden Flanschabschnitte 14 als T-Steg bezeichnet.

Figur 2 zeigt im Querschnitt in einer schematischen Darstellung, wie der Steg 10 aus Figur 1 bestimmungsgemäß für ein Windenergieanlagenrotorblatt verwendet werden kann. Das Windenergieanlagenrotorblatt weist eine saugseitige Halbschale 16 und eine druckseitige Halbschale 18 auf, die entlang einer Profilendkante 20 und einer Profilnasenkante 22 miteinander verbunden sind. In jede der beiden Halbschalen 16, 18 ist ein Gurt 24 integriert.

Zwischen diesen beiden Gurten 24 ist der Steg 10 angeordnet. Die beiden Flanschabschnitte 14 des Stegs 10 sind jeweils mit einem der Gurte 24 verklebt. Der Stegabschnitt 12 des Stegs 10 ist in einem Winkel von etwa 90° zur Breitenrichtung der Gurte 24 angeordnet.

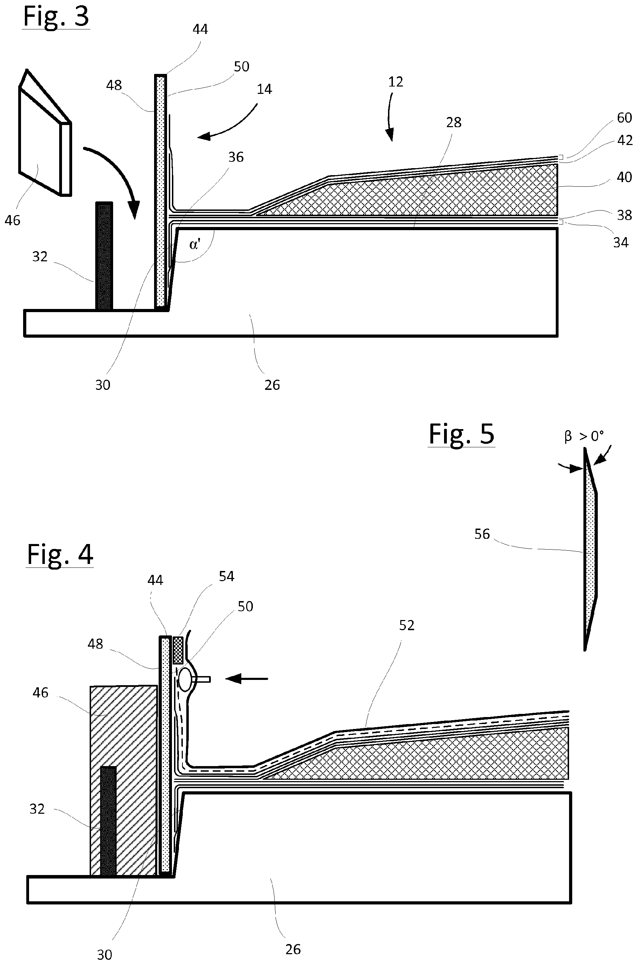

Figur 3 zeigt Teile einer Herstellungsform 26 im Querschnitt. Die Herstellungsform 26 weist eine erste Formfläche 28 und eine zweite Formfläche 30 auf, zwischen denen ein Winkel α' von etwas mehr als 90° ausgebildet ist. Außerdem weist die Herstellungsform 26 ein Widerlager in Form eines Zapfens 32 auf. Dieses ist in einem Abstand von der zweiten Formfläche 30 angeordnet und liegt dieser gegenüber.

Wesentliche Schritte des Verfahrens wurden bereits ausgeführt. Insbesondere zeigt Figur 3 zwei erste Lagen 34 von Verstärkungsfasern. Diese beiden ersten Lagen 34 weisen jeweils eine erste Teilfläche auf, die an der ersten Formfläche 28 angeordnet ist. Die ersten Lagen 34 sind außerdem um die zwischen erster Formfläche 28 und zweiter Formfläche 30 ausgebildete Kante 36 der Herstellungsform 26 herumgeführt, so dass sie jeweils eine zweite Teilfläche aufweisen, die an der zweiten Formfläche 30 angeordnet ist.

Wie in Figur 3 erkennbar, weisen diese beiden zweiten Teilflächen unterschiedliche Abmessungen auf, so dass die als erstes in die Herstellungsform 26 eingelegte erste Lage 34 weiter an der zweiten Formfläche 30 entlang geführt ist, als die als zweites in die Herstellungsform 26 eingelegte erste Lage 34.

Oberhalb der beiden zweiten Lagen 34 befindet sich eine dritte Lage 38 von Verstärkungsfasern in der Herstellungsform 26. Diese ist an der ersten Formfläche 28 angeordnet, jedoch nicht um die Kante 36 herumgeführt. Stattdessen endet sie an dem ebenfalls in Figur 3 erkennbaren pultrudierten Profil 44, das im rechten Winkel zur ersten Formfläche 28 in der Herstellungsform 26 angeordnet ist.

Weiterhin erkennt man in Figur 3 ein oberhalb der dritten Lage 38 angeordnetes Kernmaterial 40, dessen Dicke sich zu dem pultrudierten Profil 44 hin verjüngt und das in einem Abstand davon endet. Oberhalb des Kernmaterials 40 ist eine weitere dritte Lage 42 angeordnet, die ebenfalls an dem pultrudierten Profil 44 endet.

Oberhalb der weiteren dritten Lage 42 sind zwei zweite Lagen 60 von Verstärkungsfasern angeordnet. Diese weisen jeweils eine erste Teilfläche auf, die im Sprachgebrauch dieser Anmeldung ebenfalls an der ersten Formfläche 28 angeordnet ist, obwohl sie einen gewissen Abstand davon aufweist, der durch die zwischen der ersten Formfläche 28 und den ersten Teilflächen der zweiten Lagen 60 angeordneten Elemente des Stegabschnitts 12 bedingt ist. Die zweiten Lagen 60 weisen außerdem jeweils eine zweite Teilfläche auf, die etwa im Bereich der Kante 36 der Herstellungsform 26 nach oben abgewinkelt ist und von dort aus entlang des pultrudierten Profils 44 verläuft. Von dem Stegabschnitt 12 aus erstrecken sich die zweiten Teilflächen der zweiten Lagen 60 in zu den zweiten Teilflächen der ersten Lagen 34 entgegengesetzter Richtung.

Das pultrudierte Profil 44 weist eine Unterseite 48 und eine Oberseite 50 auf. Die Oberseite 50 ist der zweiten Formfläche 30 zugewandt. Die zweiten Teilflächen der ersten Lagen 34 und der zweiten Lagen 44 liegen an dieser Oberseite 50 an. Figur 3 veranschaulicht außerdem, wie Stützmittel in Form eines Keils 46 zwischen dem Zapfen 32 und der Unterseite 48 des pultrudierten Profils angeordnet werden.

In Figur 4 ist der Keil 46 bereits in Position, so dass das pultrudierte Profil 44 an dem Zapfen 32 abgestützt ist und an die zweite Formfläche 30 herangepresst wird. Außerdem ist eine Vakuumfolie 52 eingezeichnet, die mit einem Klebestreifen 54 luftdicht an die Oberseite 50 des pultrudierten Profils 44 angeschlossen ist. Der Pfeil veranschaulicht, wie flüssiges Kunststoffmaterial in die auf diese Weise geschlossene Herstellungsform 26 einströmt. Diese Vakuuminfusion wird so lange ausgeführt, bis alle zwischen Herstellungsform 26 und Vakuumfolie 52 zugänglichen Hohlräume mit dem flüssigen Kunststoffmaterial ausgefüllt sind. Anschließend härtet das flüssige Kunststoffmaterial aus, so dass das pultrudierten Profil 44 und die Verstärkungsfasern der ersten Lagen 34, der zweiten Lagen 44 und der dritten Lagen 38, 42 in das Kunststoffmaterial eingebettet sind. Anschließend kann der fertige Steg 12 nach dem Lösen des Keils 46 aus der Herstellungsform 26 entnommen werden.

Das in den Figuren 3 und 4 gezeigte pultrudierte Profil 44 weist einen rechteckigen Querschnitt auf. Figur 5 zeigt als Alternative ein pultrudiertes Profil 56, das sich zu den oben und unten gezeigten Enden seines Querschnitts hin verjüngt. Dieses pultrudierte Profil 56 ist im Querschnitt trapezförmig und weist an den genannten Enden einen Winkel β auf, der wahlweise sehr klein ausgeführt werden kann, beispielsweise im Bereich von 5° bis 30°.

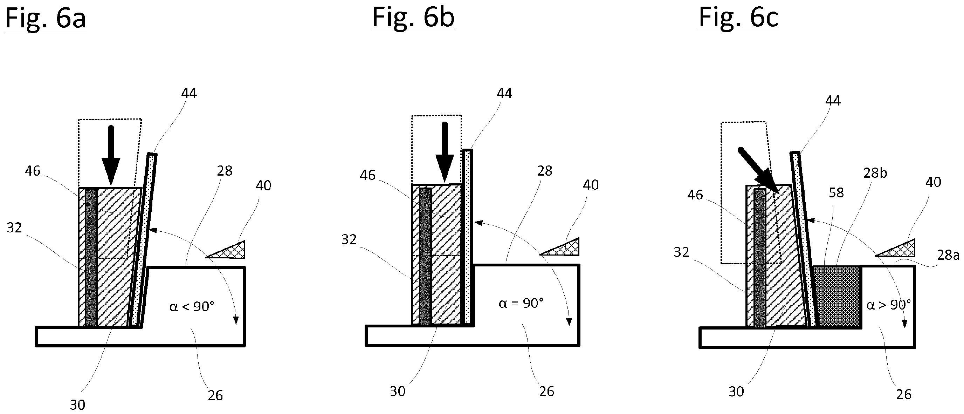

Figur 6a zeigt einen Teil einer Herstellungsform 26 mit einer ersten Formfläche 28 und einer zweiten Formfläche 30. Der in der Figur 6a eingezeichnete Winkel α bezeichnet den Winkel zwischen einem an der zweiten Formfläche 30 angeordneten pultrudierten Profil 44 und dem Stegabschnitt 12, dessen Winkellage derjenigen der ersten Formfläche 28 entspricht. Von dem Stegabschnitt 12 ist lediglich ein Kernmaterial 40 gezeigt. Das pultrudierte Profil 44 wird mit einem Keil 46 an einem Zapfen 32 der Herstellungsform 26 abgestützt. Hierzu weist der Keil 46 eine an den Winkel α angepasste Geometrie auf.

Im Beispiel der Figur 6b sind dieselben Elemente gezeigt wie in Figur 6a. Einziger Unterschied ist, dass der Winkel α in diesem Fall nicht kleiner als 90° ist, sondern 90° beträgt. Dementsprechend weist der Keil 46 in der gezeigten Querschnittsebene eine rechteckige Form auf. Die erste Formfläche 28 und die zweite Formfläche 30 werden weiterhin von der Herstellungsform 26 gebildet. Die Herstellungsform 26 ist einteilig ausgebildet.

Figur 6c zeigt ebenfalls die in den Figuren 6a und 6b dargestellten Elemente. Diesmal ist der Winkel α jedoch größer als 90°, was bei einer Ausbildung von erster Formfläche 28 und zweiter Formfläche 30 an einer einteiligen Herstellungsform 26 zu Problemen beim Entformen führen kann. Darum weist die Herstellungsform 26 in der Figur 6c als zusätzliches Element einen Einleger 58 auf.

In diesem Fall besteht die erste Formfläche 28 aus zwei Teilflächen 28a und 28b. Die Teilfläche 28a ist an der Herstellungsform 26 ausgebildet. Die Teilfläche 28b ist an dem Einleger 58 ausgebildet. Die zweite Formfläche 30 wird vollständig von dem Einleger 58 gebildet. Beim Entformen eines gemäß Figur 6c hergestellten Stegs 10 kann der gesamte Steg 10 gemeinsam mit dem Einleger 28 von der Herstellungsform 26 entfernt werden. Nachfolgend wird der Einleger 58 von dem Steg 10 entfernt.

### Liste der verwendeten Bezugszeichen

- 10: Steg
- 12: Stegabschnitt
- 14: Flanschabschnitt
- 16: saugseitige Halbschale
- 18: druckseitige Halbschale
- 20: Profilendkante
- 22: Profilnasenkante
- 24: Gurt
- 26: Herstellungsform
- 28: erste Formfläche
- 28a: erste Teilfläche der ersten Formfläche
- 28b: zweite Teilfläche der ersten Formfläche
- 30: zweite Formfläche
- 32: Zapfen
- 34: erste Lage
- 36: Kante
- 38: dritte Lage
- 40: Kernmaterial
- 42: dritte Lage
- 44: pultrudiertes Profil
- 46: Keil
- 48: Unterseite
- 50: Oberseite
- 52: Vakuumfolie
- 54: Klebestreifen
- 56: pultrudiertes Profil
- 58: Einleger
- 60: zweite Lage
- α: Winkel zwischen erster und zweiter Formfläche
- α': Winkel zwischen Flanschabschnitt und Stegabschnitt
- β: Winkel am Querschnitt des pultrudierten Profils

## Patentansprüche

1. Verfahren zur Herstellung eines Stegs (10) für ein Windenergieanlagenrotorblatt, wobei der Steg (10) einen Stegabschnitt (12) und einen Flanschabschnitt (14) zur Verbindung des Stegs (10) mit einem Gurt (24) des Windenergieanlagenrotorblatts aufweist und das Verfahren die folgenden Schritte umfasst:
• Bereitstellen einer Herstellungsform (26), die eine erste Formfläche (28) für den Stegabschnitt (12), eine zweite Formfläche (30) für den Flanschabschnitt (14) und ein Widerlager aufweist, wobei die zweite Formfläche (30) in einem Winkel α zu der ersten Formfläche (28) angeordnet ist und das Widerlager der zweiten Formfläche (30) gegenüberliegt,
• Anordnen einer ersten Lage (34) von Verstärkungsfasern in der Herstellungsform (26), sodass eine erste Teilfläche der ersten Lage (34) an der ersten Formfläche (28) und eine zweite Teilfläche der ersten Lage (34) an der zweiten Formfläche (30) angeordnet ist,
• Anordnen eines pultrudierten Profils (44,56) in der Herstellungsform (26), so dass eine Oberseite (50) des pultrudierten Profils (44,56) der zweiten Formfläche (30) zugewandt ist und die zweite Teilfläche der ersten Lage (34) zwischen der Oberseite (50) und der zweiten Formfläche (30) angeordnet ist,
• Abstützen des pultrudierten Profils (44,56) an dem Widerlager,
• Einbetten des pultrudierten Profils (44,56) und der Verstärkungsfasern in ein Kunststoffmaterial,
• Entnehmen des fertigen Stegs (10) aus der Herstellungsform (26), wobei der Stegabschnitt (12) die erste Teilfläche der ersten Lage (34) und der Flanschabschnitt (14) das pultrudierte Profil (44,56) aufweist.

2. Verfahren nach Anspruch 1, **dadurch gekennzeichnet, dass** mehrere der ersten Lagen (34) in der Herstellungsform (26) angeordnet werden, wobei die zweiten Teilflächen unterschiedliche Größen aufweisen, so dass die Dicke eines von den ersten Lagen (34) gebildeten Laminats des Flanschabschnitts (14) mit zunehmendem Abstand von dem Stegabschnitt(12) abnimmt.

3. Verfahren nach Anspruch 1 oder 2, **dadurch gekennzeichnet, dass** vor dem Einbetten in das Kunststoffmaterial eine zweite Lage (60) von Verstärkungsfasern in die Herstellungsform (26) eingelegt wird, die eine erste Teilfläche aufweist, die oberhalb der ersten Teilfläche der ersten Lage (34) angeordnet wird, und eine zweite Teilfläche, die an einem von der zweiten Teilfläche der ersten Lage (34) nicht bedeckten Abschnitt der Oberseite (50) des pultrudierten Profils (44,56) angeordnet wird.

4. Verfahren nach einem der Ansprüche 1 bis 3, **dadurch gekennzeichnet, dass** vor dem Einbetten in das Kunststoffmaterial eine dritte Lage (42) von Verstärkungsfasern in der Herstellungsform (26) an der ersten Formfläche (28) angeordnet wird, wobei sich die dritte Lage (42) nicht über die zweite Formfläche (30) erstreckt, sondern an dem pultrudierten Profil (44,56) endet.

5. Verfahren nach Anspruch 3 oder 4, **dadurch gekennzeichnet, dass** zwischen der ersten Teilfläche der ersten Lage (34) und der ersten Teilfläche der zweiten Lage (60) ein Kernmaterial (40) in die Herstellungsform (26) eingelegt wird.

6. Verfahren nach einem der Ansprüche 1 bis 5, **dadurch gekennzeichnet, dass** sich das Kernmaterial (40) in Richtung zu dem pultrudierten Profil (44,56) hin verjüngt.

7. Verfahren nach einem der Ansprüche 1 bis 6, **dadurch gekennzeichnet, dass** das Kernmaterial (40) in einem Mittelteil des Stegabschnitts (12) angeordnet wird, so dass es in einem Abstand von dem pultrudierten Profil (44,56) endet.

8. Verfahren nach einem der Ansprüche 1 bis 7, **dadurch gekennzeichnet, dass** mindestens ein Teil der Verstärkungsfasern mit einem flüssigen Kunststoffmaterial, das beim Einbetten in das Kunststoffmaterial aushärtet, vorimprägniert ist.

9. Verfahren nach einem der Ansprüche 1 bis 8, **dadurch gekennzeichnet, dass** das Einbetten in das Kunststoffmaterial durch Einbringen eines flüssigen Kunststoffmaterials in die Herstellungsform (26) in einem Vakuuminfusionsverfahren und anschließendes Aushärten des flüssigen Kunststoffmaterials erfolgt.

10. Verfahren nach Anspruch 9, **dadurch gekennzeichnet, dass** die Herstellungsform (26) für das Vakuuminfusionsverfahren mit einer Vakuumfolie (52) derart geschlossen wird, dass eine der Oberseite (50) gegenüberliegende Unterseite (48) des pultrudierten Profils (44,56) außerhalb des abgeschlossenen Bereichs verbleibt.

11. Verfahren nach einem der Ansprüche 1 bis 10, **dadurch gekennzeichnet, dass** an einer der Oberseite (50) gegenüberliegenden Unterseite (48) des pultrudierten Profils (44,56) ein Abreißgewebe angeordnet ist, dass vor dem Entnehmen des fertigen Stegs (10) aus der Herstellungsform (26) nicht entfernt wird.

12. Verfahren nach einem der Ansprüche 1 bis 11, **dadurch gekennzeichnet, dass** die Herstellungsform (26) einen Einleger (58) aufweist, an dem die zweite Formfläche (30) ausgebildet ist.

13. Verfahren nach einem der Ansprüche 1 bis 12, **dadurch gekennzeichnet, dass** beim Abstützen des pultrudierten Profils (44,56) an dem Widerlager eine Kraft auf das pultrudierte Profil (44,56) ausgeübt wird, die die Verstärkungsfasern zwischen der Oberseite (48) des pultrudierten Profils (44,56) und der zweiten Formfläche (30) kompaktiert.

14. Verfahren nach einem der Ansprüche 1 bis 13, **dadurch gekennzeichnet, dass** zum Abstützen des pultrudierten Profils (44,56) an dem Widerlager Stützmittel verwendet werden, die zwischen dem pultrudierten Profil und dem Widerlager eingesetzt werden.

15. Verfahren nach einem der Ansprüche 1 bis 14, **dadurch gekennzeichnet, dass** das Widerlager an der Herstellungsform (26) einen Zapfen (32) aufweist.

16. Verfahren nach einem der Ansprüche 1 bis 15, **dadurch gekennzeichnet, dass** sich ein Querschnitt des pultrudierten Profils (56) zu den Enden des Querschnitts hin verjüngt.

## Claims

1. Method of manufacturing a shear web (10) for a wind turbine rotor blade, the shear web (10) having a shear web portion (12) and a flange portion (14) for connecting the shear web (10) to a spar cap (24) of the wind turbine rotor blade, the method comprising the steps of:
• Providing a manufacturing mold (26) having a first mold surface (28) for the shear web portion (12), a second mold surface (30) for the flange portion (14), and an abutment, wherein the second mold surface (30) is disposed at an angle α to the first mold surface (28) and the abutment is opposite the second mold surface (30),
• Arranging a first layer (34) of reinforcing fibers in the manufacturing mold (26) such that a first partial surface of the first layer (34) is arranged on the first mold surface (28) and a second partial surface of the first layer (34) is arranged on the second mold surface (30),
• Arranging a pultruded profile (44, 56) in the manufacturing mold (26) so that an upper surface (50) of the pultruded profile (44, 56) faces the second mold surface (30) and the second partial surface of the first layer (34) is arranged between the upper surface (50) and the second mold surface (30),
• Supporting the pultruded profile (44,56) on the abutment,
• Embedding the pultruded profile (44,56) and the reinforcing fibers in a plastic material,
• Removing the finished shear web (10) from the manufacturing mold (26), the shear web portion (12) comprising the first partial surface of the first layer (34) and the flange portion (14) comprising the pultruded profile (44,56).

2. Method according to claim 1, **characterized in that** a plurality of said first layers (34) are arranged in said manufacturing mold (26), said second partial surfaces having different sizes such that the thickness of a laminate of said flange portion (14) formed by said first layers (34) decreases with increasing distance from said web portion (12).

3. Method according to claim 1 or 2, **characterized in that**, prior to embedding in the plastic material, a second layer (60) of reinforcing fibers is placed in the manufacturing mold (26), said second layer (60) having a first partial surface arranged above the first partial surface of the first layer (34) and a second partial surface arranged at a portion of the upper surface (50) of the pultruded profile (44, 56) not covered by the second partial surface of the first layer (34).

4. Method according to any one of claims 1 to 3, **characterized in that** prior to embedding in the plastic material, a third layer (42) of reinforcing fibers is arranged in the manufacturing mold (26) at the first mold surface (28), wherein the third layer (42) does not extend over the second mold surface (30) but terminates at the pultruded profile (44, 56).

5. Method according to claim 3 or 4, **characterized in that** a core material (40) is inserted into the manufacturing mold (26) between the first partial surface of the first layer (34) and the first partial surface of the second layer (60).

6. Method according to any one of claims 1 to 5, **characterized in that** the core material (40) tapers in the direction towards the pultruded profile (44,56).

7. Method according to any one of claims 1 to 6, **characterized in that** the core material (40) is arranged in a central part of the shear web section (12) so that it ends at a distance from the pultruded profile (44,56).

8. Method according to any one of claims 1 to 7, **characterized in that** at least part of the reinforcing fibers is pre-impregnated with a liquid plastic material which hardens when embedded in the plastic material.

9. Method according to any one of claims 1 to 8, **characterized in that** the embedding in the plastic material is carried out by introducing a liquid plastic material into the manufacturing mold (26) in a vacuum infusion process and subsequent curing of the liquid plastic material.

10. Method according to claim 9, **characterized in that** the manufacturing mold (26) for the vacuum infusion process is closed with a vacuum film (52) in such a way that an underside (48) of the pultruded profile (44, 56) opposite the upper side (50) remains outside the closed region.

11. Method according to one of claims 1 to 10, **characterized in that** a peel ply is arranged on an underside (48) of the pultruded profile (44, 56) opposite the upper side (50), which peel ply is not removed before the finished shear web (10) is removed from the manufacturing mold (26).

12. Method according to any one of claims 1 to 11, **characterized in that** the manufacturing mold (26) comprises an insert (58) on which the second mold surface (30) is formed.

13. Method of any one of claims 1 to 12, **characterized in that** when the pultruded profile (44,56) is supported on the abutment, a force is applied to the pultruded profile (44,56) that compacts the reinforcing fibers between the top surface (48) of the pultruded profile (44,56) and the second forming surface (30).

14. Method according to any one of claims 1 to 13, **characterized in that** support means are used to support the pultruded profile (44, 56) on the abutment, said support means being inserted between the pultruded profile and the abutment.

15. Method according to any one of claims 1 to 14, **characterized in that** the abutment has a pin (32) on the manufacturing mold (26).

16. Method according to any one of claims 1 to 15, **characterized in that** a cross-section of the pultruded profile (56) tapers toward the ends of the cross-section.

## Revendications

1. Procédé de fabrication d'une entretoise (10) pour une pale de rotor d'éolienne, dans lequel l'entretoise (10) présente une section d'entretoise (12) et une section de bride (14) permettant de relier l'entretoise (10) à une courroie (24) de la pale de rotor d'éolienne et le procédé comporte les étapes suivantes :
mise à disposition d'un moule de fabrication (26) présentant une première surface de moule (28) pour la section d'entretoise (12), une deuxième surface de moule (30) pour la section de bride (14) et une contre-butée, la deuxième surface de moule (30) étant disposée selon un angle α par rapport à la première surface de moule (28) et la contre-butée étant opposée à la deuxième surface de moule (30),
agencement d'une première couche (34) de fibres de renforcement dans le moule de fabrication (26), de telle façon qu'une première surface partielle de la première couche (34) est disposée au niveau de la première surface de moule (28) et une deuxième surface partielle de la première couche (34) est disposée au niveau de la deuxième surface de moule (30),
agencement d'un profilé pultrudé (44, 56) dans le moule de fabrication (26), de telle façon qu'une face supérieure (50) du profilé pultrudé (44, 56) est tournée vers la deuxième surface de moule (30) et que la deuxième surface partielle de la première couche (34) est disposée entre la face supérieure (50) et la deuxième surface de moule (30),
appui du profilé pultrudé (44, 56) sur la contre-butée,
enrobage du profilé pultrudé (44, 56) et des fibres de renforcement dans une matière plastique,
retrait de l'entretoise (10) finie hors du moule de fabrication (26), la section d'entretoise (12) présentant la première surface partielle de la première couche (34) et la section de bride (14) présentant le profilé pultrudé (44, 56).

2. Procédé selon la revendication 1, **caractérisé en ce que** plusieurs des premières couches (34) sont disposées dans le moule de fabrication (26), dans lequel les deuxièmes surfaces partielles présentent des dimensions différentes, de sorte que l'épaisseur d'un stratifié de la section de bride (14) formé par les premières couches (34) diminue au fur et à mesure que la distance par rapport à la section d'entretoise (12) augmente.

3. Procédé selon la revendication 1 ou 2, **caractérisé en ce qu'**avant l'enrobage dans la matière plastique, une deuxième couche (60) de fibres de renforcement est placée dans le moule de fabrication (26), laquelle présente une première surface partielle disposée sur la première surface partielle de la première couche (34), et une deuxième surface partielle disposée au niveau d'une section de la face supérieure (50) du profilé pultrudé (44, 56) non recouverte par la deuxième surface partielle de la première couche (34).

4. Procédé selon l'une des revendications 1 à 3, **caractérisé en ce qu'**avant l'enrobage dans la matière plastique, une troisième couche (42) de fibres de renforcement est disposée dans le moule de fabrication (26) au niveau de la première surface de moule (28), dans lequel la troisième couche (42) ne s'étend pas sur la deuxième surface de moule (30), mais se termine au niveau du profilé pultrudé (44, 56).

5. Procédé selon la revendication 3 ou 4, **caractérisé en ce qu'**un matériau de noyau (40) est placé dans le moule de fabrication (26) entre la première surface partielle de la première couche (34) et la première surface partielle de la deuxième couche (60).

6. Procédé selon l'une des revendications 1 à 5, **caractérisé en ce que** le matériau de noyau (40) se rétrécit en direction du profilé pultrudé (44, 56).

7. Procédé selon l'une des revendications 1 à 6, **caractérisé en ce que** le matériau de noyau (40) est disposé dans une partie centrale de la section d'entretoise (12), de telle façon qu'il se termine à une distance du profilé pultrudé (44, 56).

8. Procédé selon l'une des revendications 1 à 7, **caractérisé en ce qu'**au moins une partie des fibres de renforcement est pré-imprégnée avec une matière plastique liquide durcissant lors de l'enrobage dans la matière plastique.

9. Procédé selon l'une des revendications 1 à 8, **caractérisé en ce que** l'enrobage dans la matière plastique est réalisé par introduction d'une matière plastique liquide dans le moule de fabrication (26) au cours d'un procédé d'infusion sous vide et par durcissement consécutif de la matière plastique liquide.

10. Procédé selon la revendication 9, **caractérisé en ce que** pour le procédé d'infusion sous vide, le moule de fabrication (26) est fermé de telle façon à l'aide d'une feuille de mise sous vide (52), qu'une face inférieure (48) du profilé pultrudé (44, 56) opposée à la face supérieure (50) demeure à l'extérieur de la région fermée.

11. Procédé selon l'une des revendications 1 à 10, **caractérisé en ce qu'**un tissu déchirable, lequel n'est pas retiré avant le retrait de l'entretoise (10) finie hors du moule de fabrication (26), est disposé au niveau d'une face inférieure (48) du profilé pultrudé (44, 56) opposée à la face supérieure (50).

12. Procédé selon l'une des revendications 1 à 11, **caractérisé en ce que** le moule de fabrication (26) présente un insert (58), sur lequel est formée la deuxième surface de moule (30).

13. Procédé selon l'une des revendications 1 à 12, **caractérisé en ce que** lors de l'appui du profilé pultrudé (44, 56) sur la contre-butée, une force est exercée sur le profilé pultrudé (44, 56), laquelle compacte les fibres de renforcement entre la face supérieure (48) du profilé pultrudé (44, 56) et la deuxième surface de moule (30).

14. Procédé selon l'une des revendications 1 à 13, **caractérisé en ce que** lors de l'appui du profilé pultrudé (44, 56) sur la contre-butée, des moyens d'appui sont utilisés, lesquels sont introduits entre le profilé pultrudé et la contre-butée.

15. Procédé selon l'une des revendications 1 à 14, **caractérisé en ce que** la contre-butée sur le moule de fabrication (26) présente un tenon (32).

16. Procédé selon l'une des revendications 1 à 15, **caractérisé en ce qu'**une section transversale du profilé pultrudé (56) s'amincit vers les extrémités de la section transversale.
